# EUROPEAN PATENT SPECIFICATION

(11) **EP 0 841 736 B1**
(45) Date of publication and mention of the grant of the patent: **12.02.2003**
(21) Application number: 97308685.3
(22) Date of filing: 30.10.1997
(51) Int. Cl.: H02K 7/08, F16C 17/08, F16C 33/10

(54) **Motor**
Motor
Moteur

(30) Priority: 09.11.1996 KR 9653177
(43) Date of publication of application: 13.05.1998
(73) Proprietor: Samsung Electronics Co., Ltd., Suwon City, Kyungki-do (KR)
(72) Inventor: Lee, Chang-Woo, Suwon-city, Kyungki-Do (KR)
(74) Representative: Read, Matthew Charles

(56) References cited:
- EP-A- 0 402 240
- EP-A- 0 581 278
- FR-A- 2 670 629
- GB-A- 2 266 009
- US-A- 4 352 646
- PATENT ABSTRACTS OF JAPAN vol. 096, no. 003, 29 March 1996 & JP 07 305719 A (SONY CORP), 21 November 1995
- PATENT ABSTRACTS OF JAPAN vol. 013, no. 306 (P-897), 13 July 1989 & JP 01 079968 A (FUJI PHOTO FILM CO LTD), 24 March 1989
- PATENT ABSTRACTS OF JAPAN vol. 011, no. 119 (E-499), 14 April 1987 & JP 61 266044 A (TOSHIBA CORP), 25 November 1986
- PATENT ABSTRACTS OF JAPAN vol. 017, no. 085 (E-1322), 19 February 1993 & JP 04 281351 A (NIPPON DENSAN CORP), 6 October 1992

## Description

The present invention relates to a motor including a stator, a rotor associated with the stator for rotation with respect thereto, and a support member provided on the rotor to support the rotor on a spherical bearing between the stator and the rotor. Such a motor is known from GB 2266009A. Similar motors are also known from EP 0581278A2; US 4352646 and DE 2670629.

Semi-spherical bearings are widely known and are used to support shafts that undergo rotative or rectilinear movement. A particular advantage with semi-spherical bearings is that they can support load in both the radial and axial directions simultaneously and render the use of separate bearings for each of the radial and axial directions unnecessary. This results in an overall reduction in weight making them particularly suitable for use in internal motors in electronic goods such as computer hard drives, laser beam scanners, laser beam printers and the like.

In a laser beam printer, for example, a photosensitive drum is radiated with laser beams to form a scanned image on its surface. A rotating multi-faceted mirror system reflects the beams onto the photosensitive drum with uniform velocity so that the scanned image formed on its surface is aligned with the axis of the drum.

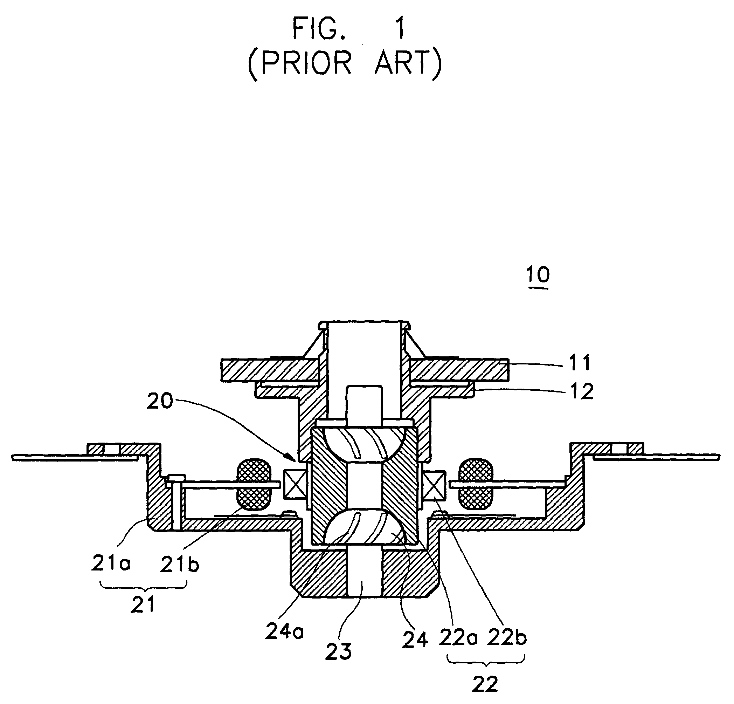

A sectional view of a conventional multi-faceted mirror system in which a conventional semi-spherical bearing is mounted is illustrated in Figure 1. The rotating multi-faceted mirror system 10 comprises a multi-faceted mirror 11 which reflects laser light beams onto a photosensitive drum (not shown), and a motor 20 for rotating and supporting the multi-faceted mirror 11. The multi-faceted mirror is encased in a housing 12 in which a hole 12a is formed, through which the multi-faceted mirror 11 is exposed.

The mirror 11 comprises a rotor 22, electromagnetically cooperating with a stator 21. The stator 21 includes a stator coil 21b wrapped around a stator frame 21a, while the rotor 22 includes a rotor magnet 22b provided around the circumference of a rotor bushing 22a. A lens bracket 13, which fixedly supports the multi-faceted mirror 11, is mounted on an upper portion of the rotor bushing 22a such that the multi-faceted mirror 11 rotates together with the rotor bushing 22a.

A semi-spherical bearing 24 is retained in the upper and lower parts of the rotor bushing 22a to provide support and to enable the rotor bushing 22a to rotate. The semi-spherical bearings 24 are fixed by a support shaft 23 provided through a centre of the rotor frame 21a and are disposed such that their spherical portions face one another.

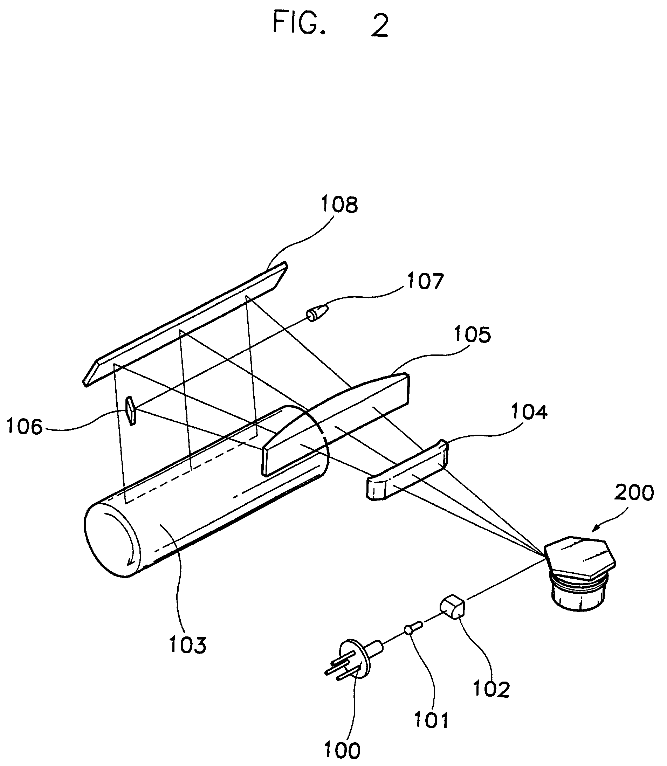

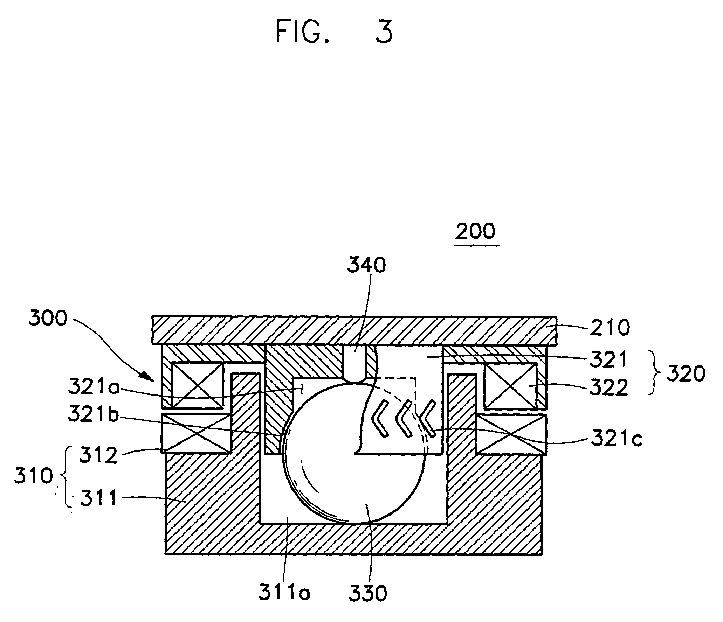

A plurality of grooves 24a are formed on an outer circumferential surface of the semi-spherical bearings 24 to enable the rotor bushing 22a to rotate smoothly. The grooves 24a, as shown in Figures 2 and 3 are spiral-shaped and draw air into the bearing when the rotor bushing 22a rotates to reduce friction between the rotor bushing 22a and the semi-spherical bearing 24.

A disadvantage with the multi-faceted mirror system described above is that the process for manufacturing the bearings is complicated. A lathe must initially be used to form the semi-spherical shape and the grooves are subsequently formed to a predetermined depth using an etching process. This results in a high overall manufacturing cost.

A further disadvantage with the conventional bearings is that wear occurs between the bearings and rotor bushing, especially when the rotor bushing starts and stops rotating. This results in the reduction in the overall service life of both the bearings and the rotor bushing. As these components wear, the power consumption must be increased to maintain the same rotational speed.

It is an aim of the present invention to overcome or substantially alleviate the aforementioned disadvantages.

A motor in accordance with the present invention is characterised in that the support member protrudes towards the spherical bearing from the rotor and is rounded where it makes contact with the spherical bearing.

Preferably, the portion of the rotor surrounding the bearing includes an arcuate guide surface corresponding to the curvature of the spherical bearing.

Embodiments of the invention will now be described, by way of example only, with reference to the accompanying drawings, in which:
Figure 1 is a vertical sectional view of the prior art rotating multi-faceted mirror system;
Figure 2 is a schematic view of an internal structure of a laser beam printer using a rotating multi-faceted mirror system in which a motor according to a preferred embodiment of the present invention is applied; and
Figure 3 is a vertical sectional view of the rotating multi-faceted mirror system shown in Figure 2.

Referring to Figure 2, there is shown a schematic view of the internal structure of a laser beam printer using a rotating multi-faceted mirror system in which a motor according to a preferred embodiment of the present invention is applied.

The laser beam printer comprises a semiconductor laser 100 and a collimate lens 101 for converting light from the semiconductor laser 100 into laser beams. The laser beam printer further comprises a rotating multi-faceted mirror system 200 for converting the laser beams into a fan beam, and a cylindrical lens 102 disposed between the multi-faceted mirror system 200 and the collimate lens 101.

The printer also includes a photosensitive drum 103 for recording an image using beams radiated from the cylindrical lens 102 via the multi-faceted mirror system 200. Disposed between the multi-faceted mirror system 200 and the photosensitive drum 103, in order, are a spherical lens 104, a toric lens 105, a horizontal synchronizing lens 106, a detecting sensor 107, and a reflector 108.

Beams are radiated toward the photosensitive drum 103 at a uniform velocity by the multi-faceted mirror system 200 and pass through the spherical lens 104 to be focused on the photosensitive drum 103 via the reflector 108. The horizontal synchronizing lens 106 and the detecting sensor 107 ensure that the beams are level to ensure that they are reflected onto the drum parallel to its longitudinal axis of rotation.

As stated above, light radiated from the semiconductor laser 100 passes through the collimate lens 101 to be converted into laser beams. These laser beams pass through the cylindrical lens 102 and the horizontal laser beams are converted into a fan beam.

The laser beams are radiated from the multi-faceted mirror system 200 at a uniform velocity, such that they are at equal positions relative to an axial direction of the photosensitive drum 103, and then pass through the toric lens 105 and are focused onto the reflector 108. The laser beams are reflected by the reflector 108 to a desired position on the photosensitive drum 103. The synchronizing lens 106 detects if the beams are not focused in the correct position to ensure the resulting image is aligned on the photosensitive drum 103.

A vertical sectional view of the rotating multi-faceted mirror system 200 is shown in Figure 3. the rotating multi-faceted mirror system 200 includes a multi-faceted mirror 210 which reflects beams onto the photosensitive drum 103 (see Figure 2), and a motor 300 for rotating and supporting the multi-faceted mirror 210.

The motor 300 comprises a stator 310 and a rotor 320. The stator 310 includes a stator frame 311 and a stator coil 312 surrounding an upper portion of the stator frame 311. The stator frame 311 defines a central aperture 311a open on its upper surface. The rotor 320 of the motor 300 includes a rotor bushing 321 and a rotor magnet 322 on the circumference of the rotor bushing 321.

The rotor bushing 321 defines a cavity 321a open towards its lower surface. A portion of the rotor bushing 321 is inserted in the central aperture in the stator frame 311a and a spherical bearing 330 is mounted between the rotor bushing 321 and the stator frame within the cavity 321a and the central aperture 311a. The bearing 330 enables the rotor bushing 321 to rotate smoothly. A lower portion of the inner surface of the cavity acts as a guide 321b to maintain the position of the bearing and is curved to match the surface of the bearing with which it almost makes contact.

A contact member 340 is provided on an upper side of the rotor bushing 321 within the cavity 321a and protrudes a predetermined distance toward the bearing 330 to limit the area of contact between the rotor bushing 321 and the bearing 330. The contact member 340 has a rounded profile such that contact between the contact member 340 and the bearing 330 is made at a single point. The contact member 340 is made of wear-resistant ceramic material.

Grooves 321 for drawing air into the bearing are formed on the outer circumference of the rotor bushing 321 to enable the rotor 320 to rotate smoothly. The grooves 321c are herringbone-shaped for optimal suction of air which acts as a lubricating force between the rotor bushing 321 and the stator frame 311.

When the motor 300 is driven, the rotor 320 and multi-faceted lens 210 rotate, the rotor bushing 321 also rotates together with the rotor 320, but as the contact member 340 makes only point-contact with the spherical bearing 330 only a limited amount of friction is created.

Further, even if friction is generated between the bearing 330 and the rotor bushing 321, the bearing 330 can also rotate with the rotor bushing 321 to limit the amount of wear and ensure precise rotation of the multi-faceted lens 210.

Finally, because the bearing 330 in the motor 300 of the present invention is spherical, it is easy to manufacture.

While this invention has been described in connection with what is presently considered to be the most practical and preferred embodiment, it is to be understood that the invention is not limited to the disclosed embodiments, but, on the contrary, is intended to cover various modifications and equivalent arrangements included within the scope of the appended claims.

## Claims

1. A motor including a stator (310), a rotor (320) associated with the stator (310) for rotation with respect thereto, and a support member (340) provided on the rotor (320) to support the rotor (320) on a spherical bearing (330) between the stator (310) and the rotor (320), **characterised in that** the support member (340) protrudes toward the spherical bearing (330) from the rotor (320) and is rounded where it makes contact with the spherical bearing (330).

2. A motor according to claim 1, wherein grooves (321c) are provided on the outer surface of the portion of the rotor (320) surrounding the bearing.

3. A motor according to claim 1, wherein the support member (340) is made of ceramic material.

4. A motor according to any preceding claim, wherein the portion of the rotor (320) surrounding the bearing (330) includes an arcuate guide surface (321b) corresponding to the curvature of the spherical bearing (330).

## Patentansprüche

1. Motor mit einem Ständer (310), einem mit dem Ständer (310) assoziierten Läufer (320) für die Rotation relativ dazu und einem an dem Läufer (320) vorgesehenen Abstützelement (340) zum Abstützen des Läufers (320) auf einem Kugellager (330) zwischen dem Ständer (310) und dem Läufer (320), **dadurch gekennzeichnet, dass** das Abstützelement (340) von dem Läufer (320) in Richtung auf das Kugellager (330) vorsteht und abgerundet ist, wo es mit dem Kugellager (330) in Kontakt kommt.

2. Motor nach Anspruch 1, bei dem Rillen (321c) auf der Außenfläche des das Lager umgebenden Abschnitts des Läufers (320) vorgesehen sind.

3. Motor nach Anspruch 1, bei dem das Abstützelement (340) aus Keramikmaterial besteht.

4. Motor nach einem der vorherigen Ansprüche, bei dem der das Lager (330) umgebende Abschnitt des Läufers (320) eine bogenförmige Führungsfläche (321b) beinhaltet, die der Krümmung des Kugellagers (330) entspricht.

## Revendications

1. Moteur comprenant un stator (310), un rotor (320) associé avec le stator (310) pour tourner par rapport à lui, et un élément de support (340) prévu sur le rotor (320) pour supporter le rotor (320) sur un palier sphérique (330) entre le stator (310) et le rotor (320), **caractérisé en ce que** l'élément de support (340) dépasse du rotor (320) vers le palier sphérique (330) et est arrondi à l'emplacement où il est en contact avec le palier sphérique (330).

2. Moteur selon la revendication 1, dans lequel des rainures (321c) sont prévues sur la surface extérieure de la partie du rotor (320) entourant le palier.

3. Moteur selon la revendication 1, dans lequel l'élément de support (340) est réalisé en matière céramique.

4. Moteur selon l'une quelconque des revendications précédentes, dans lequel la partie du rotor (320) entourant le palier (330) comprend une surface de guidage arquée (321b) correspondant à la courbure du palier sphérique (330).
